# EUROPEAN PATENT APPLICATION

(11) **EP 3 457 779 A1**
(43) Date of publication of application: **20.03.2019**
(21) Application number: 17795501.0
(22) Date of filing: 08.05.2017
(51) Int. Cl.: H04W 72/04

(54) **BASE STATION, USER EQUIPMENT, AND RELATED METHOD**

(30) Priority: 11.05.2016 CN 201610308482
(71) Applicant: Sharp Kabushiki Kaisha, Sakai City, Osaka 590-8522 (JP)
(72) Inventor: LIU, Renmao, Shanghai 201203 (CN); YAMADA, Shohei, Sakai City Osaka 590-8522 (JP); XIAO, Fangying, Shanghai 201203 (CN)
(74) Representative: Müller-Boré & Partner Patentanwälte PartG mbB
(86) International application number: PCT/CN2017/083425
(87) International publication number: WO 2017/193883

(57) **Abstract**

The present disclosure provides a base station, comprising: a sending unit, configured to send a first transmission gap configuration for anchor carriers, and send a second transmission gap configuration for non-anchor carriers, wherein the second transmission gap configuration uses any one of the following three items: the first transmission gap configuration, a transmission gap configuration for non-anchor carriers, or no transmission gap.

## Description

### Technical Field

The present disclosure relates to the field of wireless communications technology. More specifically, the present disclosure relates to a base station, a user equipment, and a related method for configuring a transmission gap for physical channels.

### Background

With the rapid growth of mobile communication and great progress of technology, the world will move towards a fully interconnected network society where anyone or any device can acquire information and share data anytime and anywhere. It is estimated that there will be 50 billion interconnected equipments by 2020, of which only about 10 billion may be mobile phones and tablet computers. The rest are not machines communicating with human beings but machines communicating with one another. Therefore, how to design a system to better support the Internet of Everything is a subject needing further and intensive study.

In the standard of Long Term Evolution (LTE) of the Third Generation Partnership Project (3GPP), machine-to-machine communication is called machine type communication (MTC). MTC is a data communication service that does not require human participation. Deployment of large-scale MTC user equipments can be used in fields such as security, tracking, billing, measurement and consumer electronics; and the specific applications of large-scale MTC user equipments include video monitoring, supply chain tracking, intelligent meter reading, and remote monitoring, etc. MTC requires lower power consumption and supports lower data transmission rate and lower mobility. The current LTE system is mainly for man-to-man communication services. The key to achieving the competitive scale advantages and application prospects of MTC services is that the LTE network supports low-cost MTC equipments.

In addition, some MTC equipments need to be installed in the basement of a residential building or at a position within the protection of an insulating foil, a metal window or a thick wall of a traditional building; as compared with the conventional equipment terminals (such as mobile phones and tablet computers) in LTE networks, the air interfaces of these equipments will obviously suffer from more serious penetration losses. 3GPP decides to study the project design and performance evaluation of MTC equipments with enhanced additional 20 dB coverage. It should be noted that MTC equipments located at poor network coverage areas have the following characteristics: extremely low data transmission rates, low latency requirements, and limited mobility. In view of the above characteristics of MTC, the LTE network can further optimize some signaling and/or channels to better support MTC services.

Therefore, at the 3GPP RAN#64 general conference held in June 2014, a new Rel-13-oriented work item of MTC with low complexity and enhanced coverage was proposed (see Non-Patent Document: RP-140990 New Work Item on Even Lower Complexity and Enhanced Coverage LTE UE for MTC, Ericsson, NSN). In the description of this work item, the LTE Rel-13 system needs to support MTC user equipment having uplink/downlink 1.4 MHz RF bandwidth to operate at any system bandwidth (e.g., 1.4 MHz, 3 MHz, 5 MHz, 10 MHz, 15 MHz, 20 MHz, and the like). The standardization of the work item would be completed at the end of 2015.

In addition, in order to better implement the Internet of Everything, another new work item was proposed at the 3GPP RAN#69 general meeting held in September 2015 (see Non-Patent Document: RP-151621 New Work Item: NarrowBand IoT (NB-IoT)), which we refer to as Narrowband Internet of Thing (NB-IoT). In the description of this item, an NB-IoT user equipment (UE) would support uplink/downlink 180 KHz RF bandwidth and three modes of operation (deployment mode): stand-alone mode of operation, guard-band mode of operation, and in-band mode of operation. The stand-alone mode of operation is to implement NB-IOT in the existing GSM frequency band, i.e., using the operating frequency band of an existing GERAN system and a scattering frequency band potentially deployed by the IoT. The guard-band mode of operation is to implement NB-IOT in the guard band of one LTE carrier, i.e., using a frequency band in the LTE frequency band that is used as the guard band. The in-band mode of operation is to implement NB-IOT in the existing LTE frequency band, i.e., using the frequency band in the LTE frequency band for actual transmission. Different bearer modes may adopt different physical parameters and processing mechanisms.

The 3GPP RANI working group divided NB IoT physical resource blocks (PRBs) or anchor carriers into anchor PRBs or anchor carriers and non-anchor PRBs or non-anchor carriers. For simplicity of description below, an anchor PRB is used to refer to an anchor PRB and an anchor carrier; and a non-anchor PRB is used to refer to a non-anchor PRB and a non-anchor carrier. A UE can receive, from anchor PRBs, data related to NB-IoT, such as a physical broadcast channel (NB-PBCH), a primary synchronization signal (NB-PSS)/secondary synchronization signal (NB-SSS), or a system information block (SIB); but a UE can only receive or send, from non-anchor PRBs, non-anchor PRBs data for unicast transmission related to NB-IoT, such as a physical downlink control channel (PDCCH), a physical downlink shared channel (PDSCH), or a physical uplink shared channel (PUSCH). When an eNB does not configure non-anchor PRBs for the UE, anchor PRBs may also be used by the user equipment to receive or send data for unicast transmission related to NB-IoT, such as a PDCCH, a PDSCH, or a PUSCH. A base station may configure non-anchor PRBs for the user equipment through a radio resource control (RRC) connection establishment message, an RRC connection reestablishment message, an RRC reconfiguration message, an RRC resume message, or the like.

At the 3GPP RAN1#84bis meeting held in Busan, South Korea, in April 2016, the RANI working group agreed to configure a transmission gap configuration for anchor PRBs and an additional transmission gap configuration for other non-anchor PRBs. At the RAN2#93bis meeting held in Dubrovnik, Croatia, the RAN2 working group agreed to use 1-bit information to indicate whether non-anchor PRBs contain a physical broadcast channel (NB-PBCH), a primary synchronization signal (NB-PSS)/secondary synchronization signal (NB-SSS) and/or a system information block (SIB) related to NB-IoT. That is to say, non-anchor PRBs may contain a physical broadcast channel (NB-PBCH), a primary synchronization signal (NB-PSS)/secondary synchronization signal (NB-SSS) and/or a system information block (SIB) related to NB-IoT. Then, when the non-anchor PRBs configured for the UE contain a physical broadcast channel (NB-PBCH), a primary synchronization signal (NB-PSS)/secondary synchronization signal (NB-SSS) and/or a system information block (SIB) related to NB-IoT, which transmission gap configuration the UE uses should be clearly defined.

### Summary of Invention

According to a first aspect of the present invention, a base station is provided, comprising: a sending unit, configured to send a first transmission gap configuration for anchor carriers, and send a second transmission gap configuration for non-anchor carriers, wherein the second transmission gap configuration uses any one of the following three items: the first transmission gap configuration, a transmission gap configuration for non-anchor carriers, or no transmission gap.

In one embodiment, the first transmission gap configuration is configured by a system information block (SIB); and the second transmission gap configuration is configured by radio resource control (RRC) signaling specific for user equipment.

According to a second aspect of the present invention, a method in a base station is provided, comprising: sending a first transmission gap configuration for anchor carriers, and sending a second transmission gap configuration for non-anchor carriers, wherein the second transmission gap configuration uses any one of the following three items: the first transmission gap configuration, a transmission gap configuration for non-anchor carriers, or no transmission gap.

In one embodiment, the first transmission gap configuration is configured by a system information block (SIB); and the second transmission gap configuration is configured by radio resource control (RRC) signaling specific for user equipment.

According to a third aspect of the present invention, a user equipment is provided, comprising: a receiving unit, configured to receive a first transmission gap configuration for anchor carriers, and receive a second transmission gap configuration for non-anchor carriers, wherein the second transmission gap configuration uses any one of the following three items: the first transmission gap configuration, a transmission gap configuration for non-anchor carriers, or no transmission gap.

In one embodiment, the first transmission gap configuration is configured by a system information block (SIB); and the second transmission gap configuration is configured by radio resource control (RRC) signaling specific for user equipment.

According to a fourth aspect of the present invention, a method in a user equipment is provided, comprising: receiving a first transmission gap configuration for anchor carriers, and receiving a second transmission gap configuration for non-anchor carriers, wherein the second transmission gap configuration uses any one of the following three items: the first transmission gap configuration, a transmission gap configuration for non-anchor carriers, or no transmission gap.

In one embodiment, the first transmission gap configuration is configured by a system information block (SIB); and the second transmission gap configuration is configured by radio resource control (RRC) signaling specific for user equipment.

### Brief Description of Drawings

The above and other features of the present disclosure will become more apparent with the following detailed description in conjunction with the accompanying drawings.
FIG. 1 is a block diagram of a base station according to an embodiment of the present disclosure.
FIG. 2 is a flowchart of a method in a base station according to an embodiment of the present disclosure.
FIG. 3 is a block diagram of a user equipment according to an embodiment of the present disclosure.
FIG. 4 is a flowchart of a method in a user equipment according to an embodiment of the present disclosure.

### Detailed Description of Embodiments

The following describes the present disclosure in detail with reference to the accompanying drawings and specific embodiments. It should be noted that the present disclosure should not be limited to the specific embodiments described below. In addition, for simplicity, detailed description of the known art not directly related to the present disclosure is omitted to prevent confusion in understanding the present disclosure.

Multiple embodiments according to the present disclosure are specifically described below, with an LTE mobile communications system and its subsequently evolved version serving as exemplary application environments, and with a base station and a user equipment that support NB-IOT serving as examples. However, it is to be noted that the present disclosure is not limited to the following embodiments, but may be applied to other wireless communication systems, such as a future 5G cellular communication system. Moreover, the present disclosure may be applied to other base stations and user equipments, such as base stations and user equipments supporting eMTC, MMTC, and so on.

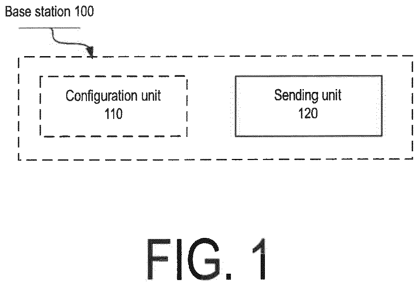

FIG. 1 is a block diagram of a base station 100 according to an embodiment of the present disclosure. As shown in the figure, the base station 100 includes: a sending unit 120. The base station 100 may further include an optional configuration unit 110. Those skilled in the art should understand that the base station 100 may also include other functional units needed for implementing its functions, such as various processors, memories, RF signal processing units, baseband signal processing units, and other physical downlink channel transmission processing units. However, for simplicity, a detailed description of these well-known elements is omitted.

The sending unit 120 sends a first transmission gap configuration for anchor carriers, and sends a second transmission gap configuration for non-anchor carriers.

The second transmission gap configuration uses any one of the following three items: the first transmission gap configuration, a transmission gap configuration for non-anchor carriers, or no transmission gap.

In one example, the first transmission gap configuration is configured by a system information block (SIB); and the second transmission gap configuration is configured by radio resource control (RRC) signaling specific for user equipment.

Optionally, the configuration unit 110 configures a first gap configuration for anchor carriers, and selectively configures a second gap configuration for non-anchor carriers.

Optionally, the sending unit 120 sends non-anchor carriers and an indicator; the indicator indicates whether the non-anchor carriers contain a physical broadcast channel (NB-PBCH), a primary synchronization signal (NB-PSS), a secondary synchronization signal (NB-SSS) and/or a system information block (SIB) related to narrowband Internet of Things (NB-IoT).

When the indicator indicates that the non-anchor carriers contain an NB-PBCH, an NB-PSS, an NB-SSS, and/or an SIB related to NB-IoT, the sending unit 120 sends the non-anchor carriers using the first gap configuration.

When the indicator indicates that the non-anchor carriers do not contain an NB-PBCH, an NB-PSS, an NB-SSS, and/or an SIB related to NB-IoT, the sending unit 120 sends the non-anchor carriers using the second gap configuration if the configuration unit 110 configures the second gap configuration or sends the non-anchor carriers using the first gap configuration if the configuration unit 110 does not configure the second gap configuration.

Optionally, the configuration unit 110 configures a transmission gap for NB-IoT physical channels. The NB-IoT physical channels described in the present invention include NB-IoT physical downlink channels (for example, NB-IoT physical downlink control channels: NB-PDCCHs, and NB-IoT physical downlink shared channels: NB-PDSCHs) and/or NB-IoT physical uplink channels (for example, NB-IoT physical uplink shared channels: NB-PUSCHs, and NB IoT physical uplink control channels: NB-PUCCHs).

NB-IoT PRBs can be divided into anchor PRBs and non-anchor PRBs. Anchor PRBs contain an NB-PBCH, an NB-PSS/NB-SSS, and/or an SIB related to NB-IoT. An NB-IoT UE can access an NB-IoT system through anchor PRBs. Once the UE accesses the system and enters an RRC connected state, the base station may configure the UE to other NB-IoT PRBs through high-level signaling. For the UE, the NB-IoT PRBs through which it accesses the NB-IoT system are anchor PRBs, whereas the other NB-IoT PRBs are non-anchor PRBs on which the UE performs only unicast transmission and reception.

When the NB-IoT UE is in a poor channel condition, a coverage enhancement technique is needed to ensure the communication between the UE and the base station. A retransmission technique is mainly used at present. When the UE needs to perform a large number of retransmissions, other NB-IoT UEs and the UE with enhanced coverage can perform multiplexing only by using the TDM (Time Division Multiplexing) method per the agreement reached by the 3GPP RANI working group. In this case, when the UE with large coverage enhancement is scheduled, other UEs need to wait for a long time to be scheduled even if they are in good channel condition. Therefore, in order to ensure fair scheduling opportunity for the UEs in good channel condition, the base station may configure a transmission gap. In the transmission gap, the UEs in good channel condition will get the opportunity to be scheduled. The UE requiring large coverage enhancement will regard subframes in the transmission gap as invalid subframes. That is to say, the subframes in the transmission gap will be skipped when the base station needs to send channels to the UE requiring large coverage enhancement and when the UE requiring large coverage enhancement receives channels.

Optionally, the configuration unit 110 may respectively a transmission gap for anchor PRBs and other non-anchor PRBs; that is, there may be two transmission gap configurations. One transmission gap configuration is used for anchor PRBs and the other transmission gap configuration is used for other non-anchor PRBs. Furthermore, the transmission gap configuration for non-anchor PRBs is optional.

In addition, to enable the system to perform load balancing better, the NB-IoT base station may configure the UE to PRBs containing an NB-PBCH, an NB-PSS/NB-SSS, and/or an SIB related to NB-IoT. The PRBs are non-anchor PRBs for the UE, but may be anchor PRBs for some UEs in the NB-IoT system. That is, some of the UEs access the NB-IoT system through the PRBs. The base station 100 may use 1-bit information (namely, an indicator) to indicate to the UE whether the configured non-anchor PRBs contain an NB-PBCH, an NB-PSS/NB-SSS, and/or an SIB related to NB-IoT. The 1-bit information may be indicated by a field "anchorCarrier" in UE-specific RRC signaling. When anchorCarrier is set to "True," it means that the configured non-anchor PRBs contain an NB-PBCH, an NB-PSS/NB-SSS, and/or an SIB related to NB-IoT; when anchorCarrier is set to "False," it means that the configured non-anchor PRBs do not contain an NB-PBCH, an NB-PSS/NB-SSS, and/or an SIB related to NB-IoT.

When the configured non-anchor PRBs contain an NB-PBCH, an NB-PSS/NB-SSS, and/or an SIB related to NB-IoT, i.e., anchorCarrier being set to "True," the transmission gap configuration for anchor PRBs will be used for sending the non-anchor PRBs. When the configured non-anchor PRBs do not contain an NB-PBCH, an NB-PSS/NB-SSS, and/or an SIB related to NB-IoT, i.e., the anchorCarrier being set to "False," the sending unit 120 uses the transmission gap configuration for non-anchor PRBs for sending the non-anchor PRBs if the configuration unit 110 configures the transmission gap configuration for non-anchor PRBs or uses the transmission gap configuration for anchor PRBs for sending the non-anchor PRBs if the configuration unit 110 does not configure the transmission gap configuration for non-anchor PRBs.

Alternatively, when the configured non-anchor PRBs do not contain an NB-PBCH, an NB-PSS/NB-SSS, and/or an SIB related to NB-IoT, i.e., the anchorCarrier being set to "False," the sending unit 120 uses the transmission gap configuration for non-anchor PRBs for sending the non-anchor PRBs if the configuration unit 110 configures the transmission gap configuration for non-anchor PRBs; if the configuration unit 110 does not configure the transmission gap configuration for non-anchor PRBs, there is no transmission gap on the non-anchor PRBs.

Alternatively, when the configured non-anchor PRBs contain an NB-PBCH, an NB-PSS/NB-SSS, and/or an SIB related to NB-IoT, i.e., the anchorCarrier being set to "true," the sending unit 120 uses the transmission gap configuration for non-anchor PRBs for sending the non-anchor PRBs if the configuration unit 110 configures the transmission gap configuration for non-anchor PRBs or uses the transmission gap configuration for anchor PRBs for sending the non-anchor PRBs if the configuration unit 110 does not configure the transmission gap configuration for non-anchor PRBs. When the configured non-anchor PRBs do not contain an NB-PBCH, an NB-PSS/NB-SSS, and/or an SIB related to NB-IoT, i.e., the anchorCarrier being set to "False," the sending unit 120 uses the transmission gap configuration for non-anchor PRBs for sending the non-anchor PRBs if the configuration unit 110 configures the transmission gap configuration for non-anchor PRBs; if the configuration unit 110 does not configure the transmission gap configuration for non-anchor PRBs, there is no transmission gap on the non-anchor PRBs.

Alternatively, a field may be specifically defined in UE-specific RRC signaling and used to directly indicate the transmission gap configuration used by the configured non-anchor PRBs. For example, a 1-bit field is defined; and when the field is "1" (or "True"), the sending unit 120 uses the transmission gap configuration for anchor PRBs for sending the non-anchor PRBs; when the field is "0" (or "False"), the sending unit 120 uses the transmission gap configuration for non-anchor PRBs for sending the non-anchor PRBs.

Alternatively, a first gap configuration, a second gap configuration, and a third gap configuration may be respectively configured for anchor PRBs, non-anchor PRBs containing an NB-PBCH, an NB-PSS/NB-SSS, and/or an SIB related to NB-IoT, and non-anchor PRBs not containing an NB-PBCH, an NB-PSS/NB-SSS, and/or an SIB related to NB-IoT. In this case, when the field anchorCarrier is set to "True," the sending unit 120 uses the first gap configuration for sending anchor PRBs and uses the second gap parameter for sending non-anchor PRBs. If the field anchorCarrier is set to "False," the sending unit 120 uses the first gap parameter for sending anchor PRBs, and uses the third gap parameter for sending non-anchor PRBs.

Alternatively, if the configuration unit 110 does not configure a gap configuration, there is no transmission gap on either anchor PRBs or non-anchor PRBs (if there are non-anchor PRBs).

In one example, transmission gap configuration information of anchor PRBs and non-anchor PRBs is configured by an SIB.

In one example, transmission gap configuration information of anchor PRBs is configured by an SIB, while transmission gap configuration information of non-anchor PRBs is configured by UE-specific RRC signaling.

In one example, transmission gap configuration information of anchor PRBs and non-anchor PRBs is configured by UE-specific RRC signaling.

In one example, transmission gap configuration information of anchor PRBs and non-anchor PRBs is configured by MAC (Medium Access Control) signaling.

In one example, radio resource control signaling may be used to indicate whether the non-anchor carriers contain an NB-PBCH, an NB-PSS, an NB-SSS, and/or an SIB related to NB-IoT.

In addition, the configuration unit 110 may also configure a gap configuration in one of the following manners:

### Manner 1:

The configuration unit 110 may configure one gap configuration A including two gap configurations (or parameters): the first gap configuration (or parameter) is used for anchor PRBs, and the second gap configuration (or parameter) is used for non-anchor PRBs. The gap configuration A is optional.

If the gap configuration A is not configured, there is no transmission gap on either anchor PRBs or non-anchor PRBs (if there are non-anchor PRBs).

If the gap configuration A is configured, and the field anchorCarrier is set to "True," the sending unit 120 uses the first gap configuration (or parameter) for sending non-anchor PRBs.

If the gap configuration A is configured and the field anchorCarrier is set to "False," the sending unit 120 uses the second gap configuration (or parameter) for sending non-anchor PRBs if the second gap configuration (or parameter) appears in the gap configuration A; if the second gap configuration (or parameter) does not appear in the gap configuration A, there is no transmission gap on non-anchor PRBs.

The field anchorCarrier indicates whether the configured non-anchor PRBs contain an NB-PBCH, an NB-PSS/NB-SSS, and/or an SIB related to narrowband Internet of Things.

The gap configuration and/or gap parameter may be configured by an SIB and/or an RRC and/or an MAC (Medium Access Control) signaling.

### Manner 2:

The configuration unit 110 may configure one gap configuration A including two gap configurations (or parameters): the first gap configuration (or parameter) is used for anchor PRBs, and the second gap configuration (or parameter) is used for non-anchor PRBs. The gap configuration A is optional.

If the gap configuration A is not configured, there is no transmission gap on either anchor PRBs or non-anchor PRBs (if there are non-anchor PRBs).

If the gap configuration A is configured and the field anchorCarrier is set to "True," the sending unit 120 uses the second gap configuration (or parameter) for sending non-anchor PRBs if the second gap configuration (or parameter) appears in the gap configuration or uses the first gap configuration (or parameter) for sending non-anchor PRBs if the second gap configuration (or parameter) does not appear in the gap configuration A.

If the gap configuration A is configured and the field anchorCarrier is set to "False," the sending unit 120 uses the second gap configuration (or parameter) for sending non-anchor PRBs if the second gap configuration (or parameter) appears in the gap configuration; if the second gap configuration (or parameter) does not appear in the gap configuration, there is no transmission gap on non-anchor PRBs.

The field anchorCarrier indicates whether the configured non-anchor PRBs contain an NB-PBCH, an NB-PSS/NB-SSS, and/or an SIB related to narrowband Internet of Things.

The gap configuration and/or gap parameter may be configured by an SIB and/or an RRC and/or an MAC (Medium Access Control) signaling.

### Manner 3:

The configuration unit 110 may configure one gap configuration A including two gap configurations (or parameters): the first gap configuration (or parameter) is used for anchor PRBs, and the second gap configuration (or parameter) is used for non-anchor PRBs. The gap configuration A is optional.

If the gap configuration A is not configured, there is no transmission gap on either anchor PRBs or non-anchor PRBs (if there are non-anchor PRBs).

If the gap configuration A is configured, and the field anchorCarrier is set to "True," the sending unit 120 uses the first gap configuration (or parameter) for sending non-anchor PRBs.

If the gap configuration A is configured and the field anchorCarrier is set to "false," the sending unit 120 uses the second gap configuration (or parameter) for sending non-anchor PRBs if the second gap configuration (or parameter) appears in the gap configuration A or uses the first gap configuration (or parameter) for sending non-anchor PRBs if the second gap configuration (or parameter) does not appear in the gap configuration A.

The field anchorCarrier indicates whether the configured non-anchor PRBs contain an NB-PBCH, an NB-PSS/NB-SSS, and/or an SIB related to narrowband Internet of Things.

The gap configuration and/or gap parameter may be configured by an SIB and/or an RRC and/or an MAC (Medium Access Control) signaling.

### Manner 4:

The configuration unit 110 may configure one gap configuration A including two gap configurations (or parameters): the first gap configuration (or parameter) is used for anchor PRBs, and the second gap configuration (or parameter) is used for non-anchor PRBs. The gap configuration A is optional.

If the gap configuration A is not configured, there is no transmission gap on either anchor PRBs or non-anchor PRBs (if there are non-anchor PRBs).

If the gap configuration A is configured, a field is specifically configured in UE-specific RRC signaling; and the field is used to directly indicate the transmission gap configuration (or parameter) used by the configured non-anchor PRBs. For example, a 1-bit field is defined; and when the field is "1" (or "True"), the sending unit 120 uses the first gap configuration (or parameter) for sending the non-anchor PRBs; when the field is "0" (or "False"), the sending unit 120 uses the first gap configuration (or parameter) for sending the non-anchor PRBs.

The gap configuration and/or gap parameter may be configured by an SIB and/or an RRC and/or an MAC (Medium Access Control) signaling.

### Manner 5:

The configuration unit 110 may configure one gap configuration A including three gap configurations (or parameters): the first gap configuration (or parameter) is used for anchor PRBs; the second gap configuration (or parameter) is used for non-anchor PRBs, and the non-anchor PRBs contain an NB-PBCH, an NB-PSS/NB-SSS, and/or an SIB related to NB-IoT; and the third gap configuration (or parameter) is used for non-anchor PRBs, and the non-anchor PRBs do not contain an NB-PBCH, an NB-PSS/NB-SSS, and/or an SIB related to NB-IoT. The gap configuration A is optional.

If the gap configuration A is not configured, there is no transmission gap on either anchor PRBs or non-anchor PRBs (if there are non-anchor PRBs).

If the gap configuration A is configured, and the field anchorCarrier is set to "True," the sending unit 120 uses the first gap configuration (or parameter) for sending anchor PRBs and uses the second gap configuration (or parameter) for sending non-anchor PRBs.

If the gap configuration A is configured, and the field anchorCarrier is set to "False," the sending unit 120 uses the first gap configuration (or parameter) for sending anchor PRBs and uses the third gap configuration (or parameter) for sending non-anchor PRBs.

The field anchorCarrier indicates whether the configured non-anchor PRBs contain an NB-PBCH, an NB-PSS/NB-SSS, and/or an SIB related to narrowband Internet of Things.

The gap configuration and/or gap parameter may be configured by an SIB and/or an RRC and/or an MAC (Medium Access Control) signaling.

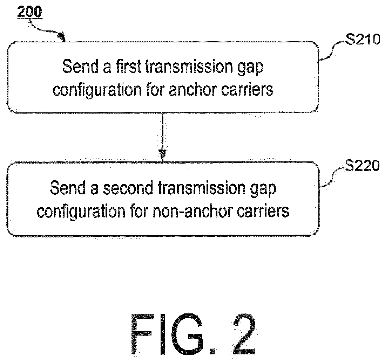

FIG. 2 is a flowchart of a method 200 performed by a base station according to an embodiment of the present disclosure. As shown in the figure, the method 200 includes the following steps.

In step S210, a first transmission gap configuration for anchor carriers is sent.

In step S220, a second transmission gap configuration for non-anchor carriers is sent.

The second transmission gap configuration uses any one of the following three items: the first transmission gap configuration, a transmission gap configuration for non-anchor carriers, or no transmission gap.

Optionally, the method 200 further includes: configuring a first gap configuration for anchor carriers, and selectively configures a second gap configuration for non-anchor carriers.

Optionally, the method 200 further includes: sending non-anchor carriers and an indicator; the indicator indicates whether the non-anchor carriers contain a physical broadcast channel (NB-PBCH), a primary synchronization signal (NB-PSS), a secondary synchronization signal (NB-SSS) and/or a system information block (SIB) related to narrowband Internet of Things (NB-IoT).

Optionally, when the indicator indicates that the non-anchor carriers contain an NB-PBCH, an NB-PSS, an NB-SSS, and/or an SIB related to NB-IoT, the non-anchor carriers are sent using the first gap configuration. When the indicator indicates that the non-anchor carriers do not contain an NB-PBCH, an NB-PSS, an NB-SSS, and/or an SIB related to NB-IoT, the non-anchor carriers are sent using the second gap configuration if the second gap configuration is configured; if the second gap configuration is not configured, the non-anchor carriers are sent using the first gap configuration.

In one example, the indicator includes a field anchorCarrier.

In one example, the first gap configuration and the second gap configuration are carried by a system information block.

In one example, the first gap configuration and the second gap configuration are carried by radio resource control signaling specific to a user equipment.

In one example, the first gap configuration is carried by a system information block, whereas the second gap configuration is carried by radio resource control signaling specific to a user equipment.

In one example, radio resource control signaling is used to indicate whether the non-anchor carriers contain an NB-PBCH, an NB-PSS, an NB-SSS, and/or an SIB related to NB-IoT.

The embodiment described in connection with the aforementioned base station 100 also applies to the method 200.

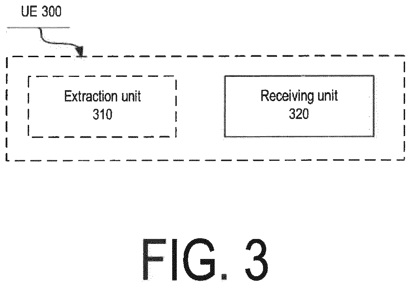

FIG. 3 is a block diagram of a user equipment (UE) 300 according to an embodiment of the present disclosure. As shown in the figure, the UE 300 includes: a receiving unit 320. The UE 300 may further include an optional extraction unit 310. Those skilled in the art should understand that the UE 300 may also include other functional units needed for implementing its functions, such as various processors, memories, RF signal processing units, baseband signal processing units, and other physical uplink channel transmission processing units. However, for simplicity, a detailed description of these well-known elements is omitted.

The receiving unit 320 receives a first transmission gap configuration for anchor carriers, and receives a second transmission gap configuration for non-anchor carriers.

The second transmission gap configuration uses any one of the following three items: the first transmission gap configuration, a transmission gap configuration for non-anchor carriers, or no transmission gap.

Optionally, the extraction unit 310 extracts a first gap configuration for anchor carriers, and extracts a second gap configuration for non-anchor carriers when the second gap configuration is available.

Optionally, the receiving unit 320 receives an indicator and non-anchor carriers. The indicator indicates whether the non-anchor carriers contain a physical broadcast channel (NB-PBCH), a primary synchronization signal (NB-PSS), a secondary synchronization signal (NB-SSS), and/or a system information block (SIB) related to narrowband Internet of Things (NB-IoT).

When the indicator indicates that the non-anchor carriers contain an NB-PBCH, an NB-PSS, an NB-SSS, and/or an SIB related to NB-IoT, the receiving unit 320 receives the non-anchor carriers using the first gap configuration.

When the indicator indicates that the non-anchor carriers do not contain an NB-PBCH, an NB-PSS, an NB-SSS, and/or an SIB related to NB-IoT, the receiving unit 320 receives the non-anchor carriers using the second gap configuration if the extraction unit 310 extracts the second gap configuration; if the extraction unit 310 does not extract the second gap configuration, the receiving unit 320 receives the non-anchor carriers using the first gap configuration.

In one example, the indicator includes a field anchorCarrier.

In one example, the first gap configuration and the second gap configuration are carried by a system information block.

In one example, the first gap configuration and the second gap configuration are carried by radio resource control signaling specific to a user equipment.

In one example, the first gap configuration is carried by a system information block, whereas the second gap configuration is carried by radio resource control signaling specific to a user equipment.

In one example, radio resource control signaling is used to indicate whether the non-anchor carriers contain an NB-PBCH, an NB-PSS, an NB-SSS, and/or an SIB related to NB-IoT.

The embodiment described in connection with the aforementioned base station 100 also applies to the UE 300.

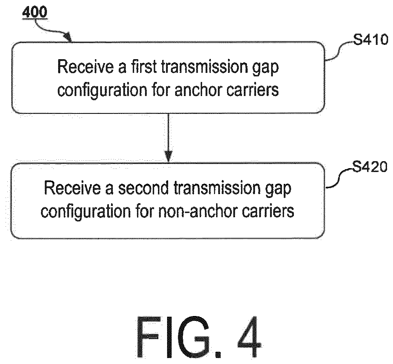

FIG. 4 is a flowchart of a method 400 performed by a user equipment (UE) according to an embodiment of the present disclosure. As shown in the figure, the method 400 includes the following steps.

In step S410, a first transmission gap configuration for anchor carriers is received.

In step S420, a second transmission gap configuration for non-anchor carriers is received.

The second transmission gap configuration uses any one of the following three items: the first transmission gap configuration, a transmission gap configuration for non-anchor carriers, or no transmission gap.

Optionally, the method 400 further includes: extracting a first gap configuration for anchor carriers, and extracting a second gap configuration for non-anchor carriers when the second gap configuration is available.

Optionally, the method 400 further includes: receiving an indicator and non-anchor carriers. The indicator indicates whether the non-anchor carriers contain a physical broadcast channel (NB-PBCH), a primary synchronization signal (NB-PSS), a secondary synchronization signal (NB-SSS), and/or a system information block (SIB) related to narrowband Internet of Things (NB-IoT).

Optionally, when the indicator indicates that the non-anchor carriers contain an NB-PBCH, an NB-PSS, an NB-SSS and/or an SIB related to NB-IoT, the non-anchor carriers are received using the first gap configuration. When the indicator indicates that the non-anchor carriers do not contain an NB-PBCH, an NB-PSS, an NB-SSS, and/or an SIB related to NB-IoT, the non-anchor carriers are received using the second gap configuration if the second gap configuration is extracted; if the second gap configuration is not extracted, the non-anchor carriers are received using the first gap configuration.

In one example, the indicator includes a field anchorCarrier.

In one example, the first gap configuration and the second gap configuration are carried by a system information block.

In one example, the first gap configuration and the second gap configuration are carried by radio resource control signaling specific to a user equipment.

In one example, the first gap configuration is carried by a system information block, whereas the second gap configuration is carried by radio resource control signaling specific to a user equipment.

In one example, radio resource control signaling is used to indicate whether the non-anchor carriers contain an NB-PBCH, an NB-PSS, an NB-SSS, and/or an SIB related to NB-IoT.

The embodiment described in connection with the aforementioned base station 100 also applies to the method 400.

The methods and related devices according to the present disclosure have been described above in conjunction with preferred embodiments. It should be understood by those skilled in the art that the methods shown above are only exemplary. The method according to the present disclosure is not limited to steps or sequences shown above. The network node and user equipment shown above may include more modules; for example, the network node and user equipment may further include modules that can be developed or developed in the future to be applied to a base station or UE, and the like. Various identifiers shown above are only exemplary, but not for limiting the present disclosure; and the present disclosure is not limited to specific cells described as examples of these identifiers. Those skilled in the art can make various alterations and modifications according to the teachings of the illustrated embodiments.

It should be understood that the above embodiments of the present disclosure may be implemented through software, hardware, or a combination of software and hardware. For example, various components of the base station and user equipment in the above embodiments can be implemented through multiple devices, and these devices include, but are not limited to: an analog circuit device, a digital circuit device, a digital signal processing (DSP) circuit, a programmable processor, an application specific integrated circuit (ASIC), a field programmable gate array (FPGA), and a complex programmable logic device (CPLD), and the like.

In this application, the "base station" refers to a mobile communication data and control switching center with large transmission power and wide coverage area, including resource allocation scheduling, data receiving, and transmitting functions. The term "user equipment" refers to a user mobile terminal, such as a terminal device that can perform wireless communication with a base station or a micro base station, including a mobile phone, a notebook, or the like.

In addition, the embodiments of the present disclosure disclosed herein may be implemented on a computer program product. More specifically, the computer program product is a product provided with a computer-readable medium having computer program logic encoded thereon. When being executed on a computing device, the computer program logic provides related operations to implement the above-described technical solutions of the present disclosure. When being executed on at least one processor of a computing system, the computer program logic enables the processor to perform the operations (methods) described in the embodiments of the present disclosure. Such an arrangement of the present disclosure is typically provided as software, code, and/or other data structures that are configured or encoded on a computer-readable medium, such as an optical medium (for example, a CD-ROM), a floppy disk, or a hard disk, or other media such as firmware or microcode on one or more ROM or RAM or PROM chips, or downloadable software images, shared database and so on in one or more modules. Software or firmware or such configuration may be installed on a computing equipment such that one or more processors in the computing equipment perform the technical solutions described in the embodiments of the present disclosure.

In addition, each functional module or each feature of the base station device and the terminal device used in each of the above embodiments may be implemented or executed by a circuit, which is usually one or more integrated circuits. Circuits designed to execute various functions described in this description may include general purpose processors, digital signal processors (DSPs), application specific integrated circuits (ASICs) or general purpose integrated circuits, field programmable gate arrays (FPGAs) or other programmable logic devices, discrete gates or transistor logic, or discrete hardware components, or any combination of the above. The general purpose processor may be a microprocessor; or the processor may be an existing processor, a controller, a microcontroller, or a state machine. The above-mentioned general purpose processor or each circuit may be configured with a digital circuit or may be configured with a logic circuit. In addition, when an advanced technology that can replace current integrated circuits emerges because of advances in semiconductor technology, the present disclosure may also use integrated circuits obtained using this advanced technology.

Although the present disclosure has been shown in connection with the preferred embodiments disclosed herein, it will be understood by those skilled in the art that various modifications, substitutions, and alterations may be made therein without departing from the spirit and scope of the present disclosure. Accordingly, the present disclosure should not be defined by the above-described embodiments, but should be defined by the appended claims and their equivalents.

The program running on the device according to the present invention may be a program that enables the computer to implement the functions of the embodiments of the present invention by controlling a central processing unit (CPU). The program or information processed by the program can be stored temporarily in volatile memory (e.g., random access memory RAM), hard disk drive (HDD), non-volatile memory (e.g., flash memory), or other memory systems.

The program for implementing the functions of the embodiments of the present invention may be recorded on a computer-readable recording medium. The corresponding functions can be achieved by reading programs recorded on the recording medium and executing them by the computer system. The so-called "computer system" may be a computer system embedded in the device, which may include operating systems or hardware (e.g., peripherals). The "computer-readable recording medium" may be a recording medium for a semiconductor recording medium, an optical recording medium, a magnetic recording medium, a short-time dynamic memory program, or any other recording medium readable by a computer.

Various features or functional modules of the device used in the above embodiments may be implemented or executed by circuits (e.g., monolithic or multi-piece integrated circuits). Circuits designed to execute the functions described in this description may include general purpose processors, digital signal processors (DSPs), application specific integrated circuits (ASICs), field programmable gate arrays (FPGAs) or other programmable logic devices, discrete gates or transistor logic, or discrete hardware components, or any combination of the above. The general-purpose processor may be a microprocessor, or may be any existing processor, a controller, a microcontroller, or a state machine. The circuit may be a digital circuit or an analog circuit. When new integrated circuit technologies that replace existing integrated circuits emerge because of advances in semiconductor technology, the present invention may also be implemented using these new integrated circuit technologies.

Furthermore, the present invention is not limited to the embodiments described above. Although various examples of the described embodiments have been described, the present invention is not limited thereto. Fixed or non-mobile electronic devices installed indoors or outdoors, such as AV equipment, kitchen equipment, cleaning equipment, air conditioner, office equipment, vending machines, and other household appliances, may be used as terminal devices or communications devices.

The embodiments of the present invention have been described in detail above with reference to the accompanying drawings. However, the specific structures are not limited to the above embodiments, and the present invention also includes any design modifications that do not depart from the main idea of the present invention. In addition, various modifications can be made to the present invention within the scope of the claims, and embodiments resulting from the appropriate combination of the technical means disclosed in different embodiments are also included within the technical scope of the present invention. In addition, components with the same effect described in the above embodiments may be replaced with one another.

## Claims

1. A base station, comprising: a sending unit, configured to send a first transmission gap configuration for anchor carriers, and send a second transmission gap configuration for non-anchor carriers, wherein
the second transmission gap configuration uses any one of the following three items: the first transmission gap configuration, a transmission gap configuration for non-anchor carriers, or no transmission gap.

2. The base station according to claim 1, wherein
the first transmission gap configuration is configured by a system information block (SIB); and
the second transmission gap configuration is configured by radio resource control (RRC) signaling specific for user equipment.

3. A method in a base station, comprising:
sending a first transmission gap configuration for anchor carriers; and
sending a second transmission gap configuration for non-anchor carriers,
wherein
the second transmission gap configuration uses any one of the following three items: the first transmission gap configuration, a transmission gap configuration for non-anchor carriers, or no transmission gap.

4. The method according to claim 3, wherein
the first transmission gap configuration is configured by a system information block (SIB); and
the second transmission gap configuration is configured by radio resource control (RRC) signaling specific for user equipment.

5. A user equipment, comprising:
a receiving unit, configured to receive a first transmission gap configuration for anchor carriers, and receive a second transmission gap configuration for non-anchor carriers, wherein
the second transmission gap configuration uses any one of the following three items: the first transmission gap configuration, a transmission gap configuration for non-anchor carriers, or no transmission gap.

6. The user equipment according to claim 5, wherein
the first transmission gap configuration is configured by a system information block (SIB); and
the second transmission gap configuration is configured by radio resource control (RRC) signaling specific for user equipment.

7. A method in a user equipment, comprising:
receiving a first transmission gap configuration for anchor carriers; and
receiving a second transmission gap configuration for non-anchor carriers, wherein
the second transmission gap configuration uses any one of the following three items: the first transmission gap configuration, a transmission gap configuration for non-anchor carriers, or no transmission gap.

8. The method according to claim 7, wherein
the first transmission gap configuration is configured by a system information block (SIB); and
the second transmission gap configuration is configured by radio resource control (RRC) signaling specific for user equipment.
